(19) Europäisches Patentamt
European Patent Office
Office européen des brevets

(11) **EP 2 389 297 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(51) Int Cl.:
***B60T 8/172*** *(2006.01)*     ***B60C 23/04*** *(2006.01)*
***B60C 23/06*** *(2006.01)*

(21) Anmeldenummer: **10700425.1**

(22) Anmeldetag: **18.01.2010**

(86) Internationale Anmeldenummer:
**PCT/EP2010/050527**

(87) Internationale Veröffentlichungsnummer:
**WO 2010/084098 (29.07.2010 Gazette 2010/30)**

(54) **VERFAHREN UND VORRICHTUNG ZUM KONTINUIERLICHEN ERMITTELN VON RADZUSTANDSGRÖSSEN EINES RADES**

METHOD AND DEVICE FOR CONTINUOUSLY DETERMINING WHEEL STATE VARIABLES OF A WHEEL

PROCÉDÉ ET DISPOSITIF DE DÉTERMINATION CONTINUE DE GRANDEURS D'ÉTAT D'UNE ROUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.01.2009   DE 102009005904**

(43) Veröffentlichungstag der Anmeldung:
**30.11.2011   Patentblatt 2011/48**

(73) Patentinhaber: **Continental Automotive GmbH 30165 Hannover (DE)**

(72) Erfinder: **HAAS, Thomas 93093 Donaustauf (DE)**

(56) Entgegenhaltungen:
**DE-A1-102007 010 780     DE-A1-102007 023 069
JP-A- 7 103 834     US-A1- 2004 207 518
US-B2- 7 248 953**

## Beschreibung

Die Erfindung betrifft ein Verfahren und eine Vorrichtung zum kontinuierlichen Ermitteln von Radzustandsgrößen eines Rades.

Bei Fahrzeugen spielt die Fahrsicherheit insbesondere in fahrdynamischen Situationen eine wichtige Rolle. Hierzu ist die Erkennung von statischen oder dynamischen physikalischen Größen, betreffend den Reifen- oder Radzustand, wie Reifendruck oder Radlast eine wichtige Eingangsgröße, um die Fahrsicherheit zu steuern und zu verbessern. Derzeit können solche Eingangsgrößen nur mit sehr großem Aufwand exakt ermittelt werden oder nur über eine sehr große Zeitdauer erfasst werden. Manche physikalische Größen können nur mittelbar durch Herleiten von Drittgrößen ermittelt werden.

Das Bestimmen von statischen oder dynamischen Reifen- oder Radzustandsgrößen, wie beispielsweise die Radlast, wird üblicherweise durch zusätzliche Systeme am Fahrzeug bewerkstelligt. Dies bedeutet einen erhöhten Aufwand an zusätzlichen Komponenten im Kraftfahrzeug.

Statische oder dynamische Reifen- oder Radzustandsgrößen können durch unmittelbares Messen im Reifen durch so genannte TPMS-Vorrichtungen (Tyre Pressure Measurement Systems) erfasst werden, die felgen- oder reifenbasiert die Reifendruck und Temperatur im Reifen messen und zum Auswerten an eine zentrale Auswerteeinheit im Kraftfahrzeug senden.

Eine solche TPMS-Vorrichtung ist beispielsweise in der Offenlegungsschrift DE 10 2007 007 135 A1 beschrieben. Dabei werden reifenspezifische Parameter von einer Radelektronik zu einer Empfangseinrichtung im Kraftfahrzeug gesendet. Die Empfangseinrichtung weist eine Signalverarbeitungsvorrichtung aufweist, die eine Auswertung der aufgenommenen Sendesignale und/oder eine Auswertung von aufgenommenen Signalen anderer Teilnehmer im Kraftfahrzeug vornimmt.

In der Offenlegungsschrift DE 10 2007 023 069 ist ein Verfahren beschrieben, mit dem die Beladung eines Kraftfahrzeugs anhand einer Analyse der Latschlängen der Reifen erkannt wird, welche insbesondere während des Bremsens, des Beschleunigens oder während einer Kurvenfahrt auftreten.

Ein Verfahren gemäß dem Oberbegriff des Anspruchs 1 ist aus der US7248953 B2 bekannt.

Diese bekannten Systeme können jedoch nur eingeschränkt verwendet werden, bedingt einerseits bei den radseitig angeordneten Messvorrichtungen durch die geringe Lebensdauer bei erhöhter Sendeintervallzeit, insbesondere der Batterie im Rad, oder andererseits wegen gesetzlicher Regulierungen. Diese erhöhte Sendeintervallzeiten sind bei sicherheitsrelevanten Funktionen erforderlich. So reglementiert beispielsweise die FCC (Federal Communications Commission) in USA, dass Informationen im Kraftfahrzeug nur in größeren Zeitintervallen drahtlos oder per Funk übertragen werden dürfen. Laut FCC dürfen Funksysteme, wie Reifendrucksystem (TPMS) üblicherweise nur alle 10 s ein Datentelegramm senden, außer bei einem gefährlichen Fahrzustand. Dann ist ausnahmsweise für eine bestimmte Zeitdauer eine erhöhte Sendefrequenz gestattet. Im Allgemeinen werden Datentelegramme alle 60 Sekunden gesendet. Fahrzeugseitige Messvorrichtungen können die Reifen- oder Radzustandsgrößen nicht genau genug messen, da sie indirekt von außerhalb des Rades die entsprechenden physikalischen Größen nur indirekt messen oder aus indirekten Messungen die entsprechenden Größen herleiten.

Der Erfindung liegt die Aufgabe zugrunde, ein Verfahren und eine Vorrichtung zum Ermitteln von Reifen- oder Radzustandsgrößen eines Rades zu schaffen, bei dem die Reifen- oder Radzustandsgrößen kontinuierlich und weitgehend genau ohne Zusatzaufwand ermittelt werden können.

Diese Aufgabe wird durch ein Verfahren mit den Merkmalen des Patentanspruchs 1 und/oder durch eine Vorrichtung mit den Merkmalen des Patentanspruchs 6 gelöst.

Bei der Erfindung werden physikalischen Größen eines Rades kontinuierlich fahrzeugseitig gemessen und gegebenenfalls ausgewertet, um einen oder mehrere Radzustandsgrößen zu ermitteln. Intermittierend werden physikalische Radzustandsgrößen direkt im Rad gemessen. Die ermittelten Radzustandsgrößen oder der fahrzeugseitig gemessenen Größen werden mit Hilfe der radseitig gemessenen Größen korrigiert.

Vorteilhafterweise werden Elemente von ohnehin im Kraftfahrzeug verwendete Vorrichtungen, wie Bremssteuergerät, Fahrstabilitätssteuergerät oder anderen Steuergeräten verwendet, um mit diesen Elementen ohnehin gemessene physikalische Größen als fahrzeugseitig gemessene physikalische Größen zu verwenden.

Vorteilhafte Ausgestaltungen und Weiterbildungen der Erfindung ergeben sich aus den Unteransprüchen sowie aus der Beschreibung in Zusammenschau mit den Figuren der Zeichnung.

Die Ausgestaltungen und Weiterbildungen der Erfindung lassen sich auch auf beliebige und geeignete Art und Weise miteinander kombinieren.

Die vorliegende Erfindung wird nachfolgend anhand der in den schematischen Figuren der Zeichnung angegebenen schematischen Ausführungsbeispiele näher erläutert. Es zeigen dabei:

Fig. 1　　ein Blockschaltbild einer erfindungsgemäßen Vorrichtung zum kontinuierlichen Ermitteln von Reifenoder Radzustandsgrößen eines Kraftfahrzeugrades,

Fig. 2　　einen Schnitt durch ein Kraftfahrzeugrad, in dem ein Teil der Vorrichtung nach Figur 1 angeordnet ist,

Fig. 3　　einen Funktionsverlauf der Radialbeschleunigung eines Kraftfahrzeugrades abhängig vom Umdrehungswinkel des Rades und

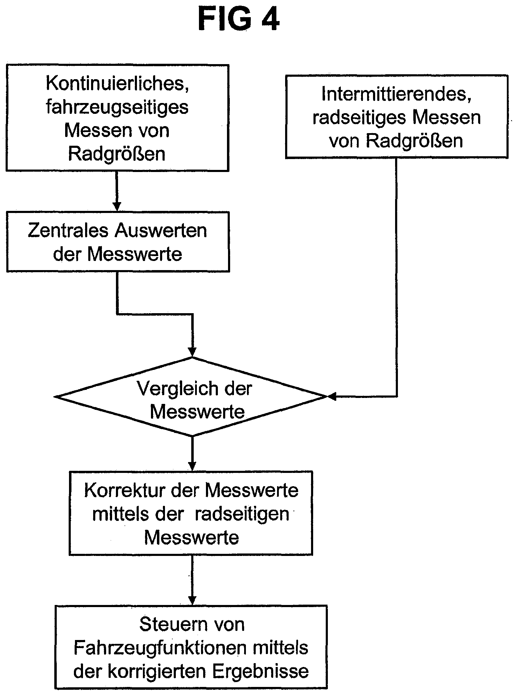

Fig. 4　　ein Ablaufdiagramm für ein Verfahren zum ein kontinuierlichen Ermitteln von Reifen- oder Radzustandsgrößen eines Kraftfahrzeugrades.

In den Figuren der Zeichnung sind gleiche und funktionsgleiche Elemente und Merkmale - sofern nichts Anderes ausgeführt ist - mit denselben Bezugszeichen versehen.

Im Folgenden wird die Erfindung anhand der Verwendung in einem Kraftfahrzeug als Ausführungsbeispiel näher erläutert. Das Verfahren und die Vorrichtung zum Ermitteln von physikalischen Radzustandsgrößen kann selbstverständlich nicht nur in Rädern eines Kraftfahrzeugs, sondern auch eines Motorrads, eines Lastkraftwagens oder eines sonstigen Nutzfahrzeugs Verwendung finden. Ebenso ist es möglich, Reifen- oder Radzustandsgrößen in Flugzeugrädern entsprechend zu ermitteln.

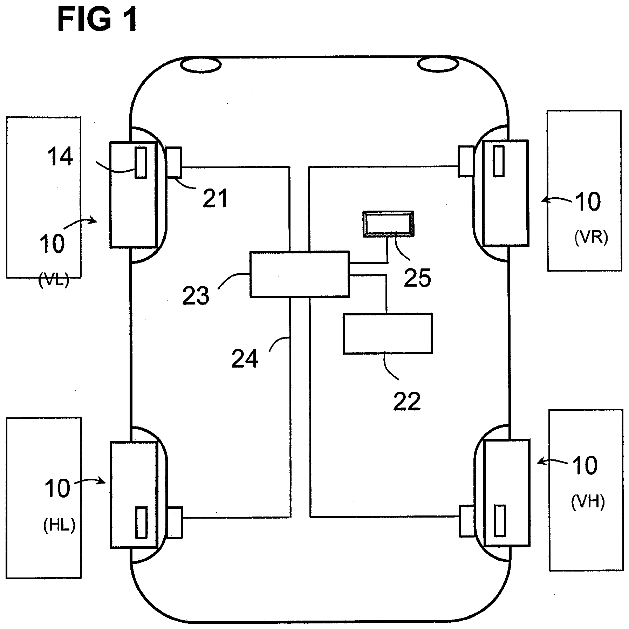

Figur 1 zeigt ein schematisches Blockschaltbild einer Vorrichtung in einem Kraftfahrzeug zum Ermitteln physikalischen Rad- oder Reifenzustandsgrößen (im Folgenden als Radzustandsgröße oder Radgröße bezeichnet) eines Kraftfahrzeugrades 10 oder -reifens.

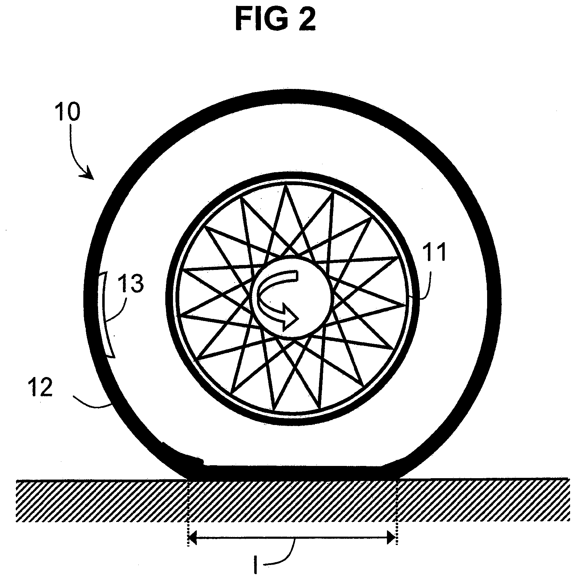

Ein Fahrzeugrad 10 weist üblicherweise eine Felge 11 (siehe Figur 2) mit darauf aufgezogenen Reifen 12 auf. Die Reifen 12 können schlauchlos sein oder auch einen Schlauch aufweisen. Solche Räder 10 mit entsprechenden Reifen 12 können bei vielfältigen Objekten zum Fahren zum Einsatz kommen. Im Folgenden wird nur noch allgemein von einem Rad 10 gesprochen (außer es ist ausdrücklich der Reifen 12 oder die Felge 11 oder ein sonstiges Teil des Rades 10 gemeint).

Die erfindungsgemäße Vorrichtung weist fahrzeugseitige Aufbauten 21 auf, die in der Nähe des Rades 10 angeordnet sind. Es sei angenommen, dass diese Aufbauten in einer bevorzugten Ausführungsform als Radelektroniken 21 ausgebildet sind. Mit den Radelektroniken 21 werden rad- oder reifenspezifische, physikalische Kenngrößen, wie Drehzahl eines Rades 10, mechanische Verformung des Rades 10 / Reifens g, usw. gemessen. Die gemessenen Werte (Messwerte) werden an eine weiterverarbeitende Vorrichtung weitergeleitet.

Die Messwerte können von den fahrzeugseitigen Radelektroniken 21 zu ohnehin im Kraftfahrzeug angeordneten Steuergeräten 22, wie ABS-Steuergerät (Antiblockiersystem), ESP-Steuergerät (Elektronisches Stabilitätsprogramm) zum fahrdynamischen Steuern des Kraftfahrzeugs, etc. übertragen werden. Die Messwerte stehen auch jedem anderen Steuergerät im Kraftfahrzeug zur Verfügung, sofern die Messwerte auf einen Datenbus oder Daten-/Signalleitungen 24 "gelegt" werden, sofern die Steuergeräte mit dem Datenbus verbunden sind. Die Messwerte können zusätzlich einer zentralen Steuer- und Auswerteeinheit 23 zugeleitet werden, sofern diese nicht mit dem Datenbus verbunden ist. In der Steuer- und Auswerteeinheit 23 werden die zu ermittelnden Radgrößen aus den Messwerten ermittelt.

Eine solche mittelbare Ermittlung (mittelbar, weil die physikalischen Größen nicht im Rad 10 gemessen werden) einer Reifen- oder Radzustandsgröße, wie beispielsweise der Radlast, ist aus der Offenlegungsschrift DE 10 2007 023 069 A1 bekannt, deren Beschreibung hiermit als Offenbarungsbestandteil der vorliegenden Anmeldung mit einbezogen wird. Dort wird beschrieben, wie die Radlast durch Messen von physikalischen Kenngrößen der Räder durch fahrzeugseitig angeordnete Messvorrichtungen ermittelt wird.

Die fahrzeugseitigen Radelektroniken 21 können dabei diverse Sensoren (wie Drehzahlsensor), Sende- und Empfangseinheiten und Elektronikeinheiten aufweisen.

Die physikalischen Kenngrößen der Räder 10 können auch radseitig direkt im Rad gemessen werden. Hierzu sind in den Rädern 10 Radelektroniken 14 angeordnet, die Sensorelemente 13 (wie Reifendrucksensor, Temperatursensor, Verformungssensor, etc), nicht zeichnerisch dargestellte Sende- und Empfangseinheiten sowie Elektronikeinheiten inklusive Energieversorgung in jeweils einem Rad 10 angeordnet aufweisen können. Die Sensorelemente 13 messen verschiedene physikalische Größen des Rades/Reifens unmittelbar, wie beispielsweise Reifendruck, Temperatur, Latschlänge und/oder Radlast und übertragen die Messwerte zum Kraftfahrzeug zum Auswerten.

In jedem Rad 10 (vorne links (VL), vorne rechts (VR), hinten links (HL) und hinten rechts (HR)), das sich während der Fahrt dreht, befindet sich eine solche radseitige Radelektronik 14. Die Messwerte werden in einem Signal drahtlos über Antennen oder kontaktbehaftet zu kraftfahrzeugseitigen Empfangseinheiten übertragen.

Die Sendesignale können bezüglich ihrer Amplitude oder Signalstärke auch so stark übertragen werden, dass die Position der Empfangseinheit keine Rolle spielt und die Signale von jeder Antenne im Rad 10 gut zu einer einzigen, zentralen Empfangseinheit (diese ist in den Figuren nicht dargestellt) im Kraftfahrzeug übertragen werden können.

Dabei ist es jedoch vorteilhaft, wenn die jeweiligen Vorrichtungen im Rad 10 individuell codiert sind, wobei diese Codierung einer Radposition entsprechen sollte. Diese Codierung

- oder auch als reifen- oder radindividuelle Kennung bezeichnet
- wird zusammen mit jedem Messwert aus dem Rad zu einer fahrzeugseitigen Empfangseinrichtung übertragen.

Die Zuordnung Kennung - Radposition kann bei einer anfänglichen Initialisierung erstmals zugeordnet oder festgelegt werden. Wenn jeder Codierung oder Kennung bei der Initialisierung eine Radposition zugewiesen wird, so kann später jeder aus den Messwerten ermittelten Radzustandsgröße eine Radposition bei der Auswertung zugeordnet werden. Somit ist immer bekannt, welche Radzustandsgröße zu welcher Radposition gehört und welche physikalische Größe von welchem Rad (-position) stammt.

Wenn von radseitigen oder reifenseitigen Vorrichtungen gesprochen wird, so ist ein Ort am Rad 10 gemeint, unabhängig davon, wo genau das Objekt angeordnet ist (innerhalb oder außerhalb des Reifens 12, an der Felge 11, etc) . Die Objekte außerhalb des Rades 10, aber im Kraftfahrzeug werden als fahrzeugseitig bezeichnet (beispielsweise Objekte am Radkasten in der Nähe der Räder 10 oder am Federbein).

Wenn die Empfangseinheiten physikalisch jeweils einem Rad 10 örtlich zugeordnet sind, so werden die empfangenen Signale anschließend über Signalleitungen 24 oder einen Datenbus an die zentrale Steuer- und Auswerteeinheit 23 weitergegeben. Dort werden alle Daten von allen Radelektroniken 21 ausgewertet. Bei fahrkritischen Situationen kann gegebenenfalls eine entsprechende fahrzeugspezifische Funktion gesteuert werden (entweder unmittelbar durch die Steuer- und Auswerteeinheit 23 oder durch ein separates Steuergerät 22), abhängig von der jeweilig ermittelten Radzustandsgröße. Zusätzlich kann für den Fahrer eine optische oder akustische Anzeigeeinheit 25 aktiviert werden, wodurch der Fahrer auf solche betriebsrelevante Informationen hingewiesen wird.

Die Messwerte und/oder die ermittelten Radzustandsgrößen können zusätzlich in einen Diagnosespeicher geschrieben werden, von wo sie mit Hilfe eines Diagnosegeräts ausgelesen werden können.

Damit die Radzustandsgrößen den Steuergeräten 22 möglichst genau und kontinuierlich zur Verfügung stehen, werden die Radzustandsgrößen eines jeden Rades 10 durch Kombination und Auswertung von fahrzeugseitig kontinuierlich gemessenen, physikalischen Größen und Korrektur mit Hilfe von radseitig intermittierend gemessenen, physikalischen Größen ermittelt.

Als eine Radzustandsgröße kann beispielsweise die Radlast durch eine fahrzeugseitige und eine radseitige Radelektronik 14, 21 ermittelt werden. Dies kann auf unterschiedliche Möglichkeiten geschehen. Bei einer ersten Möglichkeit kann die Radlast entsprechend der Formel

$$F \sim p*A \sim p*l*b$$

ermittelt werden. Hierbei ist F die Radlast, p der Reifendruck, A die Aufstandsfläche des Reifens (auch als Latsch bezeichnet), l die Länge des Latsches (gemittelt) und b die Breite des Reifens. Um die Radlast F ermitteln zu können, muss der Reifendruck p und die Länge des Latsches l gemessen werden. Die Breite b des Reifens hängt von den aufgezogenen Reifen ab und ist entweder bekannt oder kann einfach vermessen werden.

Die Latschlänge l kann durch Auswerten von Beschleunigungen des Reifens (Beschleunigungskraft oder Zentrifugalkraft) oder Verformungen der Lauffläche ermittelt werden. Diese Information wird per Funk an das Kraftfahrzeug zur Auswertung übertragen. Reifendruckmesssysteme können den Reifendruck radseitig oder auch fahrzeugseitig messen und zu der Steuer- und Auswerteeinheit 23 übertragen. Die Latschlänge kann durch Verformungssensoren im Rad 10 oder durch Schwingungssensoren fahrzeugseitig gemessen werden. Somit kann die Radlast F mittelbar (fahrzeugseitig) oder unmittelbar (radseitig) ermittelt werden.

Eine kontinuierliche Ermittlung der Radlast F ist dabei jedoch radseitig nur bedingt möglich, da einerseits die Energieversorgung nicht ausreichend ist, um die Messwerte für den Reifendruck oder die Verformung ständig (kontinuierlich - ohne Unterbrechung) zu senden. Üblicherweise sendet das Reifendruckmesssystem etwa all 60 Sekunden. Wenn bei jeder Umdrehung des Rades 10 ein Messwert gesendet werden sollte, so müsste bei hoher Geschwindigkeit (beispielsweise 250 km/h) etwa 35 Mal pro Sekunde gesendet werden. Andrerseits dürfen Funksysteme im Kraftfahrzeug nach internationalen Normen normalerweise nur mindestens alle 10 Sekunden Signale übertragen (außer bei einem sicherheitskritischen Fahrzustand). Die Funksysteme sind also ohnehin nicht dafür ausgelegt, kontinuierlich zu senden.

Um dennoch kontinuierlich zuverlässige Daten physikalische Größen der Räder 10 betreffend zur Verfügung zu haben, werden die physikalische Radgrößen fahrzeugseitig (mittelbar) kontinuierlich gemessen, auch wenn die zu messenden Größen durch ratseitige Komponenten verursacht werden. Gleichzeitig werden durch radseitig angeordnete Radelektroniken 14 radseitig (unmittelbar) dieselben physikalischen Größen regelmäßig (beispielsweise alle 10 oder x Sekunden) oder unregelmäßig gemessen. D.h. die Messwerte werden intermittierend erfasst und anschließend zu der fahrzeugseitigen Steuer- und Auswerteeinheit 23 übertragen.

Die radseitig gemessenen Messwerte werden erfindungsgemäß dazu verwendet, die fahrzeugseitig, kontinuierlich gemessenen Größen entsprechend zu korrigieren, falls sich eine merkliche Differenz in den Messwerten ergeben sollte. Hierzu werden die radseitig gemessenen Messwerte für die Auswertung in der Steuer- und Auswerteeinheit 23 zunächst mit den fahrzeugseitig gemessenen Messwerten verglichen. Besteht ein merklicher Unterschied, so werden entweder die fahrzeugseitig gemessenen Messwerte mit den radseitig gemessenen Messwerten überschrieben oder Korrekturfaktoren gebildet, die die aufgrund der fahrzeugseitig gemessenen Messwerte ermittelten Radzustandsgrößen entsprechend korrigieren. Dies ist deshalb vorteilhaft, da die radseitigen Messungen üblicherweise genauer sind als die fahrzeugseitigen Messungen.

Als physikalische Größe des Reifens/Rades 10 kann beispielsweise die Radlast F ermittelt werden (beispielsweise nach oben genannter Formel). Da alle anderen Größen (Reifendruck, Breite des Reifens) ebenfalls einfach gemessen werden können, muss noch die

Laschlänge I berechnet aus den Messwerten Zentrifugalkraft oder Verformung der Lauffläche des Reifens 12.

In der Figur 2 sowie in den weiteren Figuren haben funktionsgleiche oder konstruktionsgleiche Elemente dieselben Bezugszeichen wie in Figur 1. Der Latsch oder die Reifenaufstandsfläche ist - wie in Figur 2 dargestellt - derjenige Teil des Reifens, der über die Latschlänge I hinweg Kontakt zur Straße hält. Infolge des Gewichts des Fahrzeugs und dem elastischen Reifen (abhängig vom Gummi und Reifendruck) weicht die äußere Form der Lauffläche von der kreisrunden Form ab.

Die Länge des Latsches (Länge der Reifenaufstandsfläche = Latschlänge l) kann mit Hilfe der Zeit t, in der bei rollendem Rad 10 der Latsch durchfahren wird, berechnet werden. Hierzu muss die Radialbeschleunigung (Zentrifugalkraft; Radialbeschleunigungssensor) oder die Verformung des Reifens 12 gemessen werden.

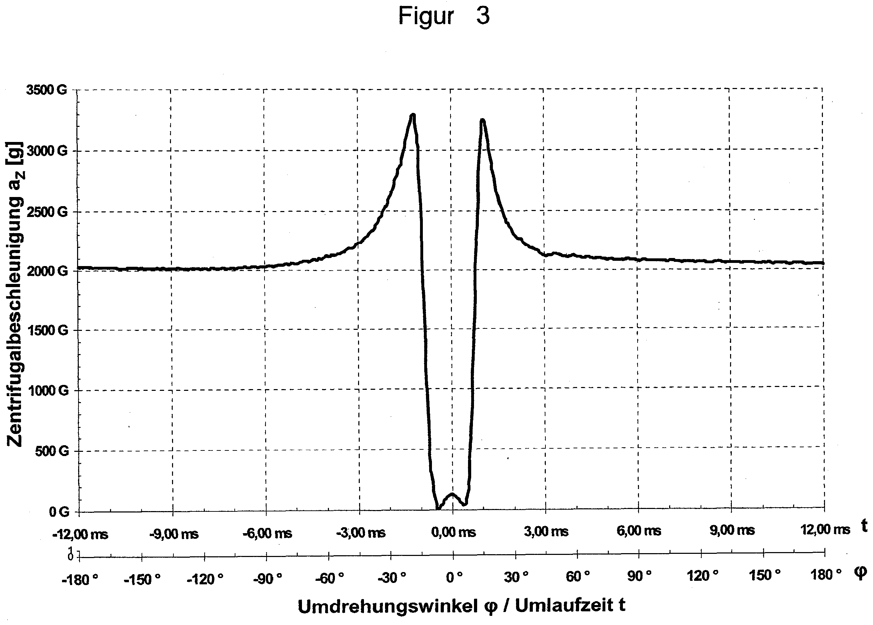

In Figur 3 ist eine Abhängigkeit der Zentrifugalbeschleunigung $a_z$ vom Umdrehungswinkel $\varphi$ (oder der Umlaufzeit t) des Rades 10 dargestellt. Abhängig von der aktuellen Geschwindigkeit braucht eine Umdrehung des Rades 10 eine bestimmte Zeit t. Somit entspricht der Winkelbereich $\Delta\varphi$, in dem sich der Latsch befindet, einer entsprechenden Latschdurchlaufzeit $\Delta t$. Die Latschdurchlaufzeit $\Delta t$ wird ermittelt zwischen den beiden Maxima der Funktion der Radialbeschleunigung (Auswertung der dargestellten Funktion mit Hilfe mathematischer Methoden oder Algorithmen). Dazwischen befindet sich das absolute Minimum der Radialbeschleunigung. Gemäß Figur 3 beträgt die Latschdurchlaufzeit $\Delta t$ etwas weniger als 0,01 Sekunden.

Die Latschlänge l kann auch durch fahrzeugseitige Messung von Radgrößen ermittelt werden. Wenn ein im Reifeninneren befindliches Masseelement (beispielsweise Luftventil oder Radelektronik 14 zum Messen des Reifendrucks) in den Latsch eintritt oder den Latsch verlässt, ergibt sich eine merkliche Veränderung im Frequenzspektrum, die durch eine fahrzeugseitige Radelektronik 21 erfasst werden kann. Werden nur die Veränderungen im Frequenzspektrum betrachtet, entspricht die Zeit zwischen den Veränderungen bei Latscheintritt und bei Latschaustritt der Latschdurchlaufzeit $\Delta t$.

Die Latschdurchlaufzeit $\Delta t$ kann aber auch durch eine Frequenzanalyse fahrzeugseitig ermittelt werden, wobei hierzu beispielsweise an der Radaufhängung fahrzeugseitig Schwingungen erfasst werden, die sich vom Rad auf die Radaufhängung übertragen. Diese Schwingungen werden entsprechend ausgewertet, um die Latschdurchlaufzeit $\Delta t$ zu erhalten. Dafür können ohnehin vorhandene Radelektroniken 21 von ABS- oder ESP-Steuergeräten 22, die in der Nähe eines jeden Rades 10 angeordnet sind, ausgenutzt werden. Somit wird der Aufwand zum Erfassen von Radzustandsgrößen gering gehalten.

Der Reifendruck kann einerseits im Reifen mit einem Reifendruckmesssystem gemessen werden. Andererseits können indirekte Reifendruckmesssysteme verwendet werden, die mit Hilfe von ABS/ESP-Sensoren den Reifendruck indirekt fahrzeugseitig ermitteln. Solche Messverfahren werden dann als indirekte Messverfahren bezeichnet.

Die Latschlänge l kann auch radseitig infolge der Verformung, insbesondere im Latscheintritts- und Latschaustrittsbereich durch Verformungssensoren in den Reifen unmittelbar gemessen werden. Beim Drehen des Rades wird ein entsprechend angeordneter Verformungssensor zweimal pro Umdrehung verformt, und zwar beim Latscheintritt als auch beim Latscheintritt. Die Zeit zwischen den beiden messbaren Verformungen ist die Latschdurchlaufzeit $\Delta t$, aus der zusammen mit der Drehzahl des Rades 10 die Latschlänge l ermittelt werden kann.

Diese Messwerte werden pro Rad 10 nicht kontinuierlich, sondern intermittierend, d.h. alle x Sekunden oder n Umdrehungen des Rades 10 gemessen und jeweils in einem Signal letztendlich an die Steuer- und Auswerteeinheit 23 übertragen. Dort werden die radseitigen Messwerte dazu benutzt, die fahrzeugseitigen Messwerte für die Latschlänge gegebenenfalls zu korrigieren. Denn im Rad 10 kann die Latschlänge l genauer gemessen werden als durch fahrzeugseitige Frequenzmessung, allerdings mit dem Nachteil der nicht kontinuierlichen Messung.

Die physikalischen Größen werden während der Fahrt (sich drehendes Rad 10) einerseits fahrzeugseitig kontinuierlich und andererseits radseitig intermittierend aufgenommen.

Mit Hilfe der Messwerte und der daraus ermittelten Radzustandsgrößen werden Fahrzeugfunktionen exakt, dynamisch und synchron gesteuert, sofern die etwas ungenaueren, kontinuierlich gemessenen Radzustandsgrößen mit den genaueren, intermittierend radseitig gemessenen Radzustandsgrößen korreliert und korrigiert werden. Es findet also ein Vergleich der Messwerte statt und gegebenenfalls eine Korrektur der Messwerte oder der ermittelten Radzustandsgrößen. Auf diese Weise werden fahrzeugseitig gemessene Größen bzgl. Messungenauigkeiten minimiert. Die intermittierend gemessenen und/oder übertragenen radseitigen Messwerte können in den mathematischen Algorithmus zum Auswerten der fahrzeugseitig gemessenen Größen immer wieder eingepflegt werden und so die Genauigkeit der Auswertung verbessern.

Auf diese Weise können physikalische Radzustandsgrößen, wie die Radlast F dynamisch genau zu jedem Zeitpunkt bestimmt werden. Dadurch kann das Steuern von fahrdynamischen Funktionen, wie Rollover, ABS, ESP usw. verbessert werden. Zusätzlich oder alternativ können statt der Messwerte auch die Ergebniswerte der Auswertung der fahrzeugseitig gemessenen Messwerte entsprechend mit Hilfe der radseitig gemessenen Messwerte bei Bedarf korrigiert werden. Wenn Korrekturfaktoren ermittelt werden, so dienen diese auch dann zur notwendigen Korrektur der fahrzeugseitigen Messwerte aufgrund des letzten Vergleichs der Messwerte, wenn gerade keine radseitigen Messwerte vorliegen oder erst etwas später wieder zur Verfügung stehen.

Die radseitig gemessenen Werte können auch dazu benutzt werden, um bei einer anfänglichen Initialisierung die Anfangswerte beispielsweise bei einem Neufahrzeug entsprechend festzulegen oder zu korrigieren.

Durch dieses Verfahren wird eine hohe Genauigkeit der Ergebnisse erreicht. Es werden ohnehin im Kraftfahrzeug verwendete Vorrichtungen und Elemente verwendet. Durch das intermittierende Messen in den Rädern 10 wird sogar Energie eingespart. Eine möglichst genaue, kontinuierliche fahrdynamische Steuerung von Kraftfahrzeug-Funktionen ist somit einfach möglich.

Auf die Messwerte können mathematische Verfahren/Algorithmen, wie Mittelwertbildung, etc., angewendet werden. So können sowohl die Messwerte als auch die ermittelten Radzustandsgrößen über einen Zeitraum hinweg gemittelt werden, um Einflüsse von zufälligen Messfehlern so gering wie möglich zu halten. Dabei wird davon ausgegangen, dass sich Radgrößen, wie Radlast, Temperatur oder Reifendruck üblicherweise relativ langsam ändern (außer bei einem geplatzten Reifen) . Einmalige Messfehler wirken sich somit nur geringfügig aus.

Zusätzlich kann auch eine Plausibilitätsbetrachtung der Messwerte stattfinden, bei der unplausible Werte nicht berücksichtigt werden. Es können auch die Messwerte von verschiedenen Rädern 10 des Kraftfahrzeugs miteinander verglichen oder auf Plausibilität geprüft werden.

Es sind auch Approximation der Messwerte durch eine mathematisch Funktion und daraus Berechnen der gewünschten Radgrößen möglich. Auch die Korrekturwerte können Einfluss auf die mathematische Funktion haben. Die fahrzeugseitig kontinuierlich gemessenen Messwerte können bereits dann korrigiert werden, wenn die mathematische Funktion noch nicht angewendet wurde, aber die radseitig gemessenen Messwerte bereits zur Verfügung stehen.

Die vorliegende Erfindung sei nicht auf die vorstehenden Ausführungsbeispiele beschränkt, sondern lässt sich auf beliebige Art und Weise modifizieren, ohne vom Gegenstand der vorliegenden Erfindung abzuweichen.

Es kann auch eine zusätzliche Unwucht in den Reifen integriert werden. Diese tote Masse kann im Gewichtsbereich von 2 bis 15 Gramm liegen. Dadurch wird die Fahrdynamik nicht beeinflusst. Anschließend kann durch kontinuierliches Auswerten von physikalischen Größen am Fahrzeug eine physikalische Größe, wie die Radlast F bestimmt werden. Dies stellt jedoch eine geringere Genauigkeit bei der Bestimmung der Radlast F dar.

In einer bevorzugten Ausgestaltung wird dabei zunächst eine bekannte Umwuchtmasse, d. h. eine Umwucht mit bekannter Masse, bereitgestellt. Diese wird radseitig an dem Rad 10 des Fahrzeugs angebracht. Zur Ermittlung der physikalischen Größe kann anschließend fahrzeugseitig die Variation der physikalischen Größe bedingt durch die radseitig angebrachte, bekannte Umwuchtmasse ermittelt und erkannt werden. Daraus kann dann die physikalische Größe abgeleitet werden.

**Patentansprüche**

1. Verfahren zum Ermitteln von Radzustandsgrößen eines Reifens durch
fahrzeugseitiges, kontinuierliches Messen von physikalischen Größen (l; p) des Rades (10),
Auswerten der physikalischen Größen (l; p) in einer zentralen, fahrzeugseitigen Auswerteeinheit (23), um einen oder mehrere Radzustandsgrößen (F) zu ermitteln,
radseitiges, intermittierendes Messen von physikalischen Größen (l; p) im Rad (10), und
Korrigieren der fahrzeugseitig gemessenen Größen (l; p) oder der ermittelten Radzustandsgrößen (F) mit Hilfe der radseitig gemessenen Größen,
**dadurch gekennzeichnet, dass**
als physikalische Größen (1; p) Reifendruck (p) und Latschlänge (1) gemessen werden.

2. Verfahren nach Anspruch 1,
**dadurch gekennzeichnet,**
**dass** als Radzustandsgröße (F) die Radlast ermittelt wird.

3. Verfahren nach einem der vorhergehenden Ansprüche,
**dadurch gekennzeichnet,**
**dass** die physikalischen Größen (l; p) radseitig periodisch gemessen und/oder in Messsignale periodisch übertragen werden.

4. Verfahren nach einem der vorhergehenden Ansprüche,
**dadurch gekennzeichnet,**
**dass** radseitige eine Umwuchtmasse vorhanden ist oder angebracht wird.

5. Verfahren nach Anspruch 4,
**dadurch gekennzeichnet,**
**dass** fahrzeugseitig eine Variation der physikalischen Größen (l; p) unter Verwendung der radseitigen Umwucht ermittelt wird und aus der ermittelten Variation die physikalische Größe abgeleitet wird.

6. Vorrichtung zum kontinuierlichen Ermitteln von Radzustandsgrößen eines Reifens,
mit radseitigen Messvorrichtungen (14), die in jeweils einem Rad (10) angeordnet sind, zum intermittierenden Messen von physikalischen Größen (p, l) eines Rades (10),
mit fahrzeugseitigen Messvorrichtungen (21), die jeweils fahrzeugseitig in der Nähe eines Rades (10) angeordnet sind, zum kontinuierlichen Messen von physikalischen Größen eines Rades (10),

mit einer Steuer- und Auswerteeinheit (23), zu der die gemessenen physikalischen Größen (l; p) übertragen werden, wobei die Steuer- und Auswerteeinheit (23) die physikalischen Größen (l; p) auswertet und eine Korrektureinrichtung aufweist, durch die die fahrzeugseitig gemessenen Größen (l; p) oder die daraus ermittelten Radzustandsgrößen (F) mit Hilfe der radseitig gemessenen physikalischen Größen (l; p) oder der daraus ermittelten Radzustandsgrößen (F) korrigiert werden,

**dadurch gekennzeichnet, dass**

die radseitigen und fahrzeugseitigen Messvorrichtungen (14,21) dazu eingerichtet sind, als physikalische Größen (1; p) Reifendruck (p) und Latschlänge (1) zu messen.

7. Vorrichtung nach Anspruch 6,
**dadurch gekennzeichnet,**
**dass** die radseitigen Messvorrichtungen (14) Reifendruck- oder Verformungsmessvorrichtungen sind.

8. Vorrichtung nach einem der Ansprüche 6 oder 7,
**dadurch gekennzeichnet,**
**dass** die fahrzeugseitigen Messvorrichtungen (21) Teile von ohnehin im Fahrzeug verwendeten Steuervorrichtungen (22) sind, durch die Fahrzeugfunktionen fahrdynamisch gesteuert werden.

9. Vorrichtung nach einem der Ansprüche 6 bis 8,
**dadurch gekennzeichnet,**
**dass** die Räder (10) Räder eines Personenkraftfahrzeugs, eines Lastkraftfahrzeugs, eines Motorrades, eines Nutzfahrzeugs oder eines Flugzeugs sind.

10. Vorrichtung nach einem der Ansprüche 6 bis 9,
**dadurch gekennzeichnet,**
**dass** eine bekannte Umwuchtmasse vorhanden ist, die radseitig an dem Rad (10) angebracht ist.

## Claims

1. Method for determining a wheel state variable of a tire by
vehicle-side, continuous measurement of physical variables (l; p) of the wheel (10),
evaluation of the physical variables (l; p) in a central, vehicle-side evaluation unit (23), in order to determine one or more wheel state variables (F),
wheel-side, intermittent measurement of physical variables (l; p) in the wheel (10), and
correction of the variables (l; p) measured on the vehicle side or of the determined wheel state variables (F) using the variables measured on the wheel side, **characterized in that**
the tire pressure (p) and the length (1) of the tire contact area are measured as physical variables (l; p).

2. Method according to Claim 1,
**characterized**
**in that** the wheel load is determined as a wheel state variable (F).

3. Method according to one of the preceding claims,
**characterized**
**in that** the physical variables (l; p) are measured periodically on the wheel side and/or transmitted periodically in measurement signals.

4. Method according to one of the preceding claims,
**characterized**
**in that** an unbalance mass is present or mounted on the wheel side.

5. Method according to Claim 4,
**characterized**
**in that** variation of the physical variables (l; p) is determined on the vehicle side using the wheel-side unbalance, and the physical variabile is derived from the determined variation.

6. Device for continuously determining wheel state variables of a tire,
having wheel-side measuring devices (14) which are each arranged in one wheel (10), for the purpose of intermittently measuring physical variables (p, 1) of a wheel (10),
having vehicle-side measuring devices (21) which are each arranged on the vehicle side in the vicinity of a wheel (10), for the purpose of continuously measuring physical variables of a wheel (10),
having a control and evaluation unit (23) to which the measured physical variables (l; p) are transmitted, wherein the control and evaluation unit (23) evaluates the physical variables (l; p) and has a correction device by means of which the variables (l; p) which are measured on the vehicle side or the wheel state variables (F) which are determined therefrom are corrected using the physical variables (l; p) measured on the wheel side or the wheel state variables (F) which are determined therefrom,
**characterized in that**
the wheel-side and vehicle-side measuring devices (14, 21) are configured to measure the tire pressure (p) and the length (1) of the tire contact area as physical variables (l; p).

7. Device according to Claim 6,
**characterized**
**in that** the measuring devices (14) on the wheel side are devices for measuring tire pressure or deformation.

8. Device according to either of Claims 6 and 7, **characterized in that** the vehicle-side measuring devices (21) are parts of control devices (22) which are used in the vehicle in any case, and by which the vehicle functions are controlled in terms of vehicle movement dynamics.

9. Device according to one of Claims 6 to 8, **characterized in that** the wheels (10) are wheels of a passenger car, truck, motor cycle, utility vehicle or aircraft.

10. Device according to one of Claims 6 to 9, **characterized in that** a known unbalance mass is present which on the wheel side is mounted on the wheel (10).

**Revendications**

1. Dispositif de détermination de grandeurs d'état de roue d'un pneu par mesure continue, du côté du véhicule, de grandeurs physiques (1 ; p) de la roue (10), interprétation des grandeurs physiques (1 ; p) dans une unité d'interprétation (23) centrale côté véhicule afin de déterminer une ou plusieurs grandeurs d'état de roue (F), mesure intermittente, du coté de la roue, de grandeurs physiques (1 ; p) dans la roue (10), et correction des grandeurs (1 ; p) mesurées du côté du véhicule ou des grandeurs d'état de roue (F) déterminées à l'aide des grandeurs mesurées du côté de la roue, **caractérisé en ce que** les grandeurs physiques (1 ; p) mesurées sont la pression du pneu (p) et la longueur de l'aplatissement (1).

2. Procédé selon la revendication 1, **caractérisé en ce que** la grandeur d'état de roue (F) déterminée est la charge de roue.

3. Procédé selon l'une des revendications précédentes, **caractérisé en ce que** les grandeurs physiques (1 ; p) du côté de la roue sont mesurées périodiquement et/ou transmises périodiquement dans des signaux de mesure.

4. Procédé selon l'une des revendications précédentes, **caractérisé en ce qu'**une masse de balourd est présente ou montée du côté de la roue.

5. Procédé selon la revendication 4, **caractérisé en ce**

**qu'**une variation des grandeurs physiques (1 ; p) est déterminée du côté du véhicule en utilisant le balourd du côté de la roue et la grandeur physique est dérivée à partir de la variation déterminée de la grandeur physique.

6. Dispositif de détermination en continu de grandeurs d'état de roue d'un pneu, comprenant des dispositifs de mesure côté roue (14) qui sont respectivement disposés dans une roue (10), servant à la mesure intermittente de grandeurs physiques (p, 1) d'une roue (10), comprenant des dispositifs de mesure côté véhicule (21) qui sont respectivement disposés du côté du véhicule à proximité d'un moyeu (10), servant à la mesure continue de grandeurs physiques d'une roue (10), comprenant une unité de commande et d'interprétation (23) à laquelle sont transmises les grandeurs physiques (I ; p) mesurées, l'unité de commande et d'interprétation (23) interprétant les grandeurs physiques (1 ; p) et possédant un appareil de correction par le biais duquel les grandeurs (1 ; p) mesurées du côté du véhicule ou les grandeurs d'état de roue (F) qui sont déterminées à partir de celles-ci sont corrigées à l'aide des grandeurs physiques (1 ; p) mesurées du côté de la roue ou des grandeurs d'état de roue (F) qui sont déterminées à partir de celles-ci, **caractérisé en ce que** les dispositifs de mesure côté roue et côté véhicule (14, 21) sont configurés pour mesurer, en tant que grandeurs physiques (1 ; p), la pression du pneu (p) et la longueur de l'aplatissement (1).

7. Dispositif selon la revendication 6, **caractérisé en ce que** les dispositifs de mesure côté roue (14) sont des dispositifs de mesure de la pression du pneu ou de la déformation.

8. Dispositif selon l'une des revendications 6 ou 7, **caractérisé en ce que** les dispositifs de mesure côté véhicule (21) font partie de dispositifs de commande (22) qui sont de toute façon utilisés dans le véhicule, par le biais desquels des fonctions du véhicule sont commandées en fonction de la dynamique de conduite.

9. Dispositif selon l'une des revendications 6 à 8, **caractérisé en ce que** les roues (10) sont les roues d'un véhicule de tourisme, d'un poids lourd, d'une motocyclette, d'un véhicule utilitaire ou d'un aéronef.

10. Dispositif selon l'une des revendications 6 à 9, **caractérisé en ce qu'**il existe une masse de balourd connue qui est montée du côté de la roue sur la roue (10).

**FIG 1**

# FIG 2

Figur 3

# FIG 4

```
┌─────────────────────┐        ┌─────────────────────┐
│ Kontinuierliches,   │        │ Intermittierendes,  │
│ fahrzeugseitiges    │        │ radseitiges Messen  │
│ Messen von          │        │ von Radgrößen       │
│ Radgrößen           │        └─────────────────────┘
└─────────────────────┘
          │
          ▼
┌─────────────────────┐
│ Zentrales Auswerten │
│ der Messwerte       │
└─────────────────────┘
```

Vergleich der Messwerte

Korrektur der Messwerte mittels der radseitigen Messwerte

Steuern von Fahrzeugfunktionen mittels der korrigierten Ergebnisse

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007007135 A1
- DE 102007023069

- US 7248953 B2
- DE 102007023069 A1